# EUROPÄISCHE PATENTANMELDUNG

(11) **EP 1 231 764 A2**
(43) Veröffentlichungstag der Anmeldung: **14.08.2002**
(21) Anmeldenummer: 01127845.4
(22) Anmeldetag: 22.11.2001
(51) Int. Cl.: H04M 3/46

(54) **Kommunikationseinheit zum Verbindungsaufbau mittels verschiedener Kommunikationsmoden**

(30) Priorität: 22.11.2000 DE 10057847
(71) Anmelder: Fujitsu Siemens Computers GmbH, 81739 München (DE)
(72) Erfinder: Viechter, Erich, 86356 Neusäss (DE)
(74) Vertreter: Epping Hermann & Fischer

(57) **Zusammenfassung**

Die Erfindung betrifft eine Kommunikationseinheit (3) mit einem Speicher (10) zur Aufnahme von Daten möglicher Kommunikationspartner, einer Verbindungsvorrichtung (11) zum Herstellen von Kommunikationsverbindungen mit einem Kommunikationspartner (2) mittels verschiedener Kommunikationstechniken und einer Steuereinheit (9) zur Ansteuerung der Verbindungsvorrichtung (11), um unter Verwendung von in dem Speicher (10) enthaltenen und/oder manuell eingebbaren Daten eine Kommunikationsverbindung aufzubauen. Eine erfindungsgemäße Kommunikationseinheit ist dadurch gekennzeichnet, daß die Steuereinheit (9) bei einer Störung im Verbindungsaufbau die Verbindungsvorrichtung (11) derart ansteuert, daß eine Kommunikationsverbindung mittels einer anderen Kommunikationstechnik aufgebaut wird.

## Beschreibung

Die Erfindung betrifft eine Kommunikationseinheit mit
- einem Speicher zur Aufnahme von Daten möglicher Kommunikationspartner,
- eine Verbindungsvorrichtung zum Herstellen von Kommunikationsverbindungen mit einem Kommunikationspartner mit verschiedenen Kommunikationstechniken,
- eine Steuereinheit zur Ansteuerung der Verbindungsvorrichtung, um unter Verwendung von in dem Speicher enthaltenen und/oder manuell eingebbaren Daten eine Kommunikationsverbindung aufzubauen.

Moderne Kommunikationsanlagen, beispielsweise Telefonanlagen in Unternehmen, weisen bereits vielfältige Schnittstellen mit Computersystemen auf. Einerseits kann mittels eines Computers registriert werden, welche Anrufe getätigt worden sind, wodurch eine detaillierte Zeit- und Kostenerfassung möglich ist. Andererseits ist es über spezielle Software auch möglich, die Telefonanlage vom Computer aus zu steuern, so daß beispielsweise ein elektronisches Telefonbuch geführt und aus diesem Telefonbuch heraus direkt Telefonverbindungen zu einem Kommunikationspartner aufgebaut werden können. Dies vereinfacht den Aufbau einer Kommunikationsverbindung erheblich und reduziert die Fehler durch Fehleingaben. Fehlende oder unvollständige Daten in dem Speicher können manuell ergänzt werden.

Wenn der gewünschte Kommunikationspartner nicht erreichbar ist, besteht oftmals die Möglichkeit, ihn mit einer anderen Kommunikationstechnik dennoch zu erreichen. Wird beispielsweise das Festnetztelefon nicht abgehoben, kann als Umgehungslösung die Mobilfunknummer gewählt werden. Ist das Mobilfunktelefon nicht eingeschaltet oder wird nicht abgenommen, besteht noch die Möglichkeit, eine SMS-Nachricht oder eine E-Mail zu verschicken. Weiterhin wäre es möglich, ein Fax mit der Bitte um Rückruf zu senden. Selbst wenn man sämtliche Daten zum Aufbau von Kommunikationsverbindungen im Computer gespeichert hat, ist es mit erheblichem Aufwand verbunden, sämtliche Kommunikationstechniken einzeln anzuwählen, um mit dem gewünschten Kommunikationspartner in Kontakt zu treten.

Aufgabe der Erfindung ist es daher, eine Kommunikationseinheit anzugeben, die die Herstellung einer Kommunikationsverbindung mit einem Kommunikationspartner unter Verwendung verschiedener Kommunikationstechniken in vereinfachter Weise vornimmt.

Diese Aufgabe wird gemäß der Erfindung mit einer Kommunikationseinheit der eingangs genannten Art gelöst, die dadurch gekennzeichnet ist, daß die Steuereinheit bei einer Störung im Verbindungsaufbau die Verbindungsvorrichtung derart ansteuert, daß eine Kommunikationsverbindung mit einer anderen Kommunikationstechnik aufgebaut wird.

Einer Kommunikationstechnik wird zunächst der Vorrang gegeben. Ist es nicht möglich, mit dieser Kommunikationstechnik eine Verbindung aufzubauen, beispielsweise weil der gewünschte Kommunikationspartner die Verbindung nicht annimmt oder gerade anderweitig mit dieser Kommunikationstechnik kommuniziert, versucht die erfindungsgemäße Kommunikationseinheit automatisch, eine Verbindung mit einer anderen Kommunikationstechnik aufzubauen. Die eingangs beschriebenen Möglichkeiten, wie ein gewünschter Kommunikationspartner erreicht werden kann, werden gemäß der Erfindung automatisch durchgeführt. In vorteilhafter Weise sind in dem Speicher neben den Daten der Kommunikationspartner auch Textnachrichten abgelegt, die automatisch weitergeleitet werden, da der Inhalt oft der gleiche ist. Dadurch sind Nachrichten, die per SMS oder per E-Mail verschickt werden, nicht jedesmal neu einzugeben.

Weiterhin ist es vorteilhaft, wenn den verschiedenen Kommunikationstechniken Prioritäten zugeordnet werden können. Dadurch kann festgelegt werden, ob zuerst die eine oder die andere Kommunikationstechnik angewandt werden soll, also beispielsweise erst eine SMS-Nachricht oder eine E-Mail geschickt werden soll.

Weiterhin erweist es sich als vorteilhaft, wenn die Auswahl der Kommunikationstechniken durch eine Benutzervorgabe beeinflußbar ist. In weniger dringlichen Fällen werden dabei von der automatischen Steuerung weniger Kommunikationstechniken eingesetzt als bei dringlichen Fällen. So wird es nur bei höchster Dringlichkeit notwendig sein, den gewünschten Kommunikationspartner auf seiner Privatnummer anzurufen oder ihn gar unter einer Urlaubsrufnummer zu erreichen. Das Wählen einer Mobilfunknummer oder das Schicken einer E-Mail ist dagegen auch in weniger dringlichen Fällen ein geeignetes Mittel.

Die Erfindung wird nachfolgend anhand eines Ausführungsbeispiels näher erläutert. Es zeigt:
- Figur 1: eine erfindungsgemäße Kommunikationseinheit und
- Figur 2: ein Beispiel einer Prioritätenliste mit Dringlichkeitsstufen.

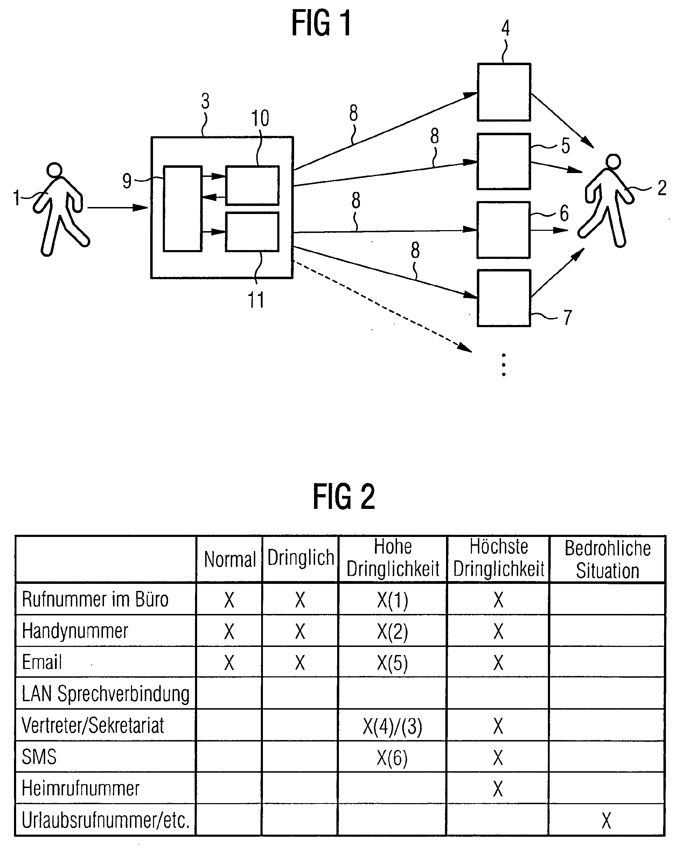

In der Darstellung von Figur 1 versucht eine erste Person 1 eine zweite Person 2 zu erreichen. Die Person 1 ist dabei im Besitz einer erfindungsgemäßen Kommunikationseinheit 3. Die Person 2 kann mit einer Vielzahl von Kommunikationstechniken erreicht werden. So steht ein Festnetztelefon 4, ein Mobiltelefon 5, ein E-Mail-Anschluß 6 und eine LAN-Sprechverbindung 7 zur Verfügung. Weiter vorhanden, aber in der Figur nicht dargestellt, ist ein Vertreter, ein Sekretariat, ein SMS-System, eine Heimrufnummer sowie eine Urlaubsrufnummer. An dieser Stelle ist eine Vielzahl weiterer Kommunikationstechniken möglich, die sich problemlos in die erfindungsgemäße Kommunikationseinheit integrieren lassen. Die Kommunikationseinheit 3 der Person 1 ist in der Lage, sämtliche Kommunikationstechniken zu verwenden, um Verbindungen 8 zur Person 2 aufzubauen.

In einer ersten Ausgangssituation versucht die Person 1 die Person 2 mit hoher Dringlichkeit zu erreichen. Zunächst wählt Person 1 die Festnetznummer von Person 2. Die Person 2 nimmt allerdings das Gespräch nicht an. Daraufhin aktiviert die Person 1 die automatische Steuerung der Kommunikationseinheit 3 und gibt vor, daß der Wunsch, den Kommunikationspartner, nämlich Person 2, zu erreichen, hohe Dringlichkeit besitzt. Der im folgenden beschriebene Ablauf ist in der Figur 2 dargestellt. Die Kreuze in den Spalten der Tabelle bedeuten, daß die entsprechende Kommunikationstechnik verfügbar ist. Die Zahlenangaben, die beispielhaft in der Spalte "hohe Dringlichkeit" zusätzlich eingetragen sind, stehen für die Reihenfolge, in der die Kommunikationstechniken angewendet werden sollen. Für jeden gespeicherten Kommunikationspartner kann ein eigenes Profil gespeichert werden.

Eine Steuereinheit 9 der Kommunikationseinheit 3 weiß nun, daß die Person 2 über das Festnetztelefon 4 nicht erreichbar war. Daher besorgt sich die Steuereinheit 9 aus dem Speicher 10 die Nummer, unter der die Person 2 über Mobilfunk zu erreichen ist. Eine Verbindungsvorrichtung 11, die für das Herstellen der Verbindung zuständig ist, versucht nun, eine Mobilfunkverbindung zum Mobilfunktelefon 5 der Person 2 herzustellen. Ist die Kommunikationseinheit 3 auch damit nicht erfolgreich, wird automatisch versucht, eine telefonische Verbindung zum Sekretariat der Person 2 aufzubauen. Die entsprechende Nummer ist ebenfalls im Speicher 10 abgelegt. Ist weder das Sekretariat noch ein Vertreter, zu dem versucht wird, eine Verbindung aufzubauen, erreichbar, wird eine Textnachricht an den E-Mail-Anschluß 6 der Person 2 verschickt. Die Textnachricht ist im Speicher 10 abgelegt und gilt für alle möglichen Kommunikationspartner. In der Regel wird es sich um eine einfache Nachricht handeln mit dem Inhalt "bitte um Rückruf". Zuletzt wird eine SMS-Nachricht versandt, deren Inhalt ebenfalls auf Bitte um Rückruf lautet.

Da es sich nicht um höchste Dringlichkeit handelt, wird nicht versucht, die Person 2 zu Hause zu erreichen.

In einer anderen Ausgangssituation versucht Person 1 Person 2 ebenfalls mit hoher Dringlichkeit zu erreichen. Allerdings ist der Festnetzanschluß von Person 2 belegt. Wiederum aktiviert Person 1 die automatische Steuerung der Kommunikationseinheit 3. Jedoch wird nicht versucht, die Person 2 über das Mobilfunktelefon 5 zu erreichen, da ja bekannt ist, daß Person 2 gerade telefoniert. Allerdings besteht noch die Möglichkeit, an Person 2 eine Textnachricht mit der Bitte um Rückruf zu versenden, entweder an das E-Mail-System oder als SMS-Nachricht.

In der beschriebenen Art kann für jede Situation ein Szenario gespeichert werden, wie versucht werden soll, die Person 2 zu erreichen.

## Patentansprüche

1. Kommunikationseinheit mit:
- einem Speicher (10) zur Aufnahme von Daten möglicher Kommunikationspartner (2),
- einer Verbindungsvorrichtung (11) zum Herstellen von Kommunikationsverbindungen mit einem Kommunikationspartner (2) mittels verschiedener Kommunikationstechniken,
- einer Steuereinheit (9) zur Ansteuerung der Verbindungsvorrichtung (11),
- um unter Verwendung von in dem Speicher (10) enthaltenen und/oder manuell eingebbaren Daten eine Kommunikationsverbindung aufzubauen,
**dadurch gekennzeichnet,**
**daß** die Steuereinheit (9) bei einer Störung im Verbindungsaufbau die Verbindungsvorrichtung (11) derart ansteuert, daß eine Kommunikationsverbindung mit einer anderen Kommunikationstechnik aufgebaut wird.

2. Kommunikationseinheit nach Anspruch 1,
**dadurch gekennzeichnet,**
**daß** in den Speicher (10) Textnachrichten zur Weiterleitung mit einer dafür geeigneten Kommunikationstechnik aufnehmbar sind.

3. Kommunikationseinheit nach Anspruch 1,
**dadurch gekennzeichnet,**
**daß** den Kommunikationstechniken Prioritäten zuordenbar sind.

4. Kommunikationseinheit nach Anspruch 1,
**dadurch gekennzeichnet,**
**daß** die Auswahl der Kommunikationstechniken durch eine Benutzervorgabe beeinflußbar ist.
